# EUROPÄISCHE PATENTANMELDUNG

(11) **EP 0 986 113 A1**
(43) Veröffentlichungstag der Anmeldung: **15.03.2000**
(21) Anmeldenummer: 99112153.4
(22) Anmeldetag: 24.06.1999
(51) Int. Cl.: H01M 2/10, H04M 1/72, H04B 1/38

(54) **Batteriepack eines tragbaren Telefons sowie ein solches Batteriepack verwendendes tragbares Telefon**

(30) Priorität: 09.09.1998 DE 19841073
(71) Anmelder: ROBERT BOSCH GMBH, 70442 Stuttgart (DE)
(72) Erfinder: Bieneck, Uwe, 31234 Edemissen (DE); Reuter, Markus, 38302 Wolfenbuettel (DE); Edler, Klaus, 31249 Hohenhameln (DE); Lerchner, Henry, 31224 Peine (DE)

(57) **Zusammenfassung**

Ein Batteriepack für ein tragbares Telefon weist zwei Verschlüsse zum Verbinden des Batteriepacks mit dem Gehäuse des tragbaren Telefons auf. Dabei sind die beiden Verschlüsse gegenüberstehend in den Seitenflächen des Batteriepacks angeordnet. Ein entsprechendes Gehäuse des tragbaren Telefons, das ein solches Batteriepack verwendet weist zwei Gegenstücke der beiden Verschlüsse zum Einrasten des Batteriepacks auf.

## Beschreibung

Die Erfindung betrifft eine Batteriepack für ein tragbares Telefon sowie ein tragbares Telefon, das ein solches Batteriepack verwendet.

Zur Energieversorgung tragbarer Telefone, wie beispielsweise Mobiltelefone, sind diese mit einem sog. Batteriepack versehen. Diese Batteriepacks sind mit einem Verschlußmechanismus ausgerüstet, damit das Batteriepack am Gehäuse des tragbaren Telefons befestigt werden kann. Dabei befindet sich ein Gegenstück des Verschlusses am Gehäuse des tragbaren Telefons. Ferner muß sichergestellt sein, daß eine elektrische Verbindung zwischen dem Batteriepack und der im Telefongehäuse untergebrachten Telefonelektronik hergestellt wird und das Batteriepack fest aber lösbar am Gehäuse befestigt ist. Bekannt sind Batteriepacks mit einem einseitigen Verschluß, wobei das Batteriepack beispielsweise auf Schienen in das Gehäuse eingeführt wird und der Verschluß einschnappt, wenn das Batteriepack seinen Bestimmungsort erreicht hat. Das Batteriepack wird durch Öffnen des einseitigen Verschlusses und anschließendes Herauschieben aus dem Telefongehäuse entfernt.

Nachteilig ist dabei, daß dieser Entnahmevorgang nach dem Lösen des Verschlusses ein Umgreifen des Benutzers bedingt, um das Batteriepack abnehmen zu können.

Der Erfindung liegt daher die Aufgabe zugrunde, ein Batteriepack, das einfach in ein tragbares Telefongehäuse eingesetzt werden kann sowie ein entsprechendes tragbares Telefon zu entwickeln.

Die Aufgabe wird durch die Merkmale des Anspruchs 1 und des Anspruchs 4 gelöst. Bevorzugte Ausgestaltungen der Erfindung sind Gegenstand der Unteransprüche.

Ein erfindungsgemäßes Batteriepack für ein tragbares Telefon weist zwei Verschlüsse zum Verbinden des Batteriepacks mit dem Gehäuse des tragbaren Telefons auf.

Vorzugsweise sind die beiden Verschlüsse gegenüberstehend in den Seitenflächen des Batteriepacks angeordnet, wobei die Verschlüsse vorzugsweise durch Schnappverschlüsse gebildet werden.

Bei einem erfindungsgemäßen tragbaren Telefon mit einem Batteriepack gemäß der Erfindung weist das Gehäuse des Telefons Gegenstücke zu den beiden Verschlüssen zum Einrasten des Batteriepacks auf.

Ferner kann das Gehäuse des Telefons und das Batteriepack eine Vorrichtung zum rotierenden Einfädeln des Batteriepacks in das Gehäuse des Telefons aufweisen.

Ferner kann das Gehäuse des Telefons und das Batteriepack eine Vorrichtung zum Einschieben des Batteriepacks in das Gehäuse des Telefons aufweisen.

Ein besonderer Vorteil des erfindungsgemäßen Batteriepacks bzw. des tragbaren Telefons liegt darin begründet, daß durch das Prinzip des beidseitigen Verschlusses der Benutzer das Batteriepack beim Einsetzen oder Abnehmen automatisch zwischen zwei Fingers hält und ein Umgreifen nicht mehr notwendig ist.

Eine bevorzugte Ausführungsform der Erfindung wird nachfolgend anhand der Zeichnungen erläutert.
Fig. 1 zeigt eine perspektivische Ansicht eines tragbaren Telefons mit dem daran angeordneten Batteriepack, und
Fig. 2 zeigt eine Draufsicht auf das tragbare Telefon der Fig. 1.

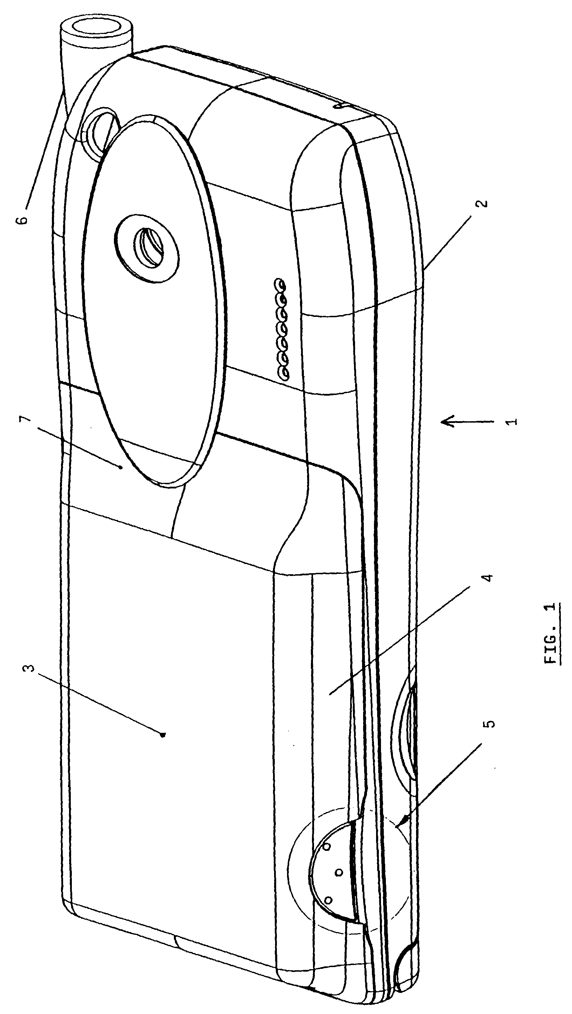

Fig. 1 zeigt ein tragbares Telefon 1 bestehend aus einem Gehäuse 2 und einem an dem Gehäuse 2 befestigten Batteriepack 3. In einer Seitenwand 4 des Batteriepacks 3 ist ein Verschluß 5 angeordnet. Der Verschluß 5 ist vorzugsweise im hinteren Bereich des Batteriepacks 3 angeordnet, wobei der vordere Bereich definiert ist als derjenige, der in Richtung der Antennenhalterung 6 zeigt.

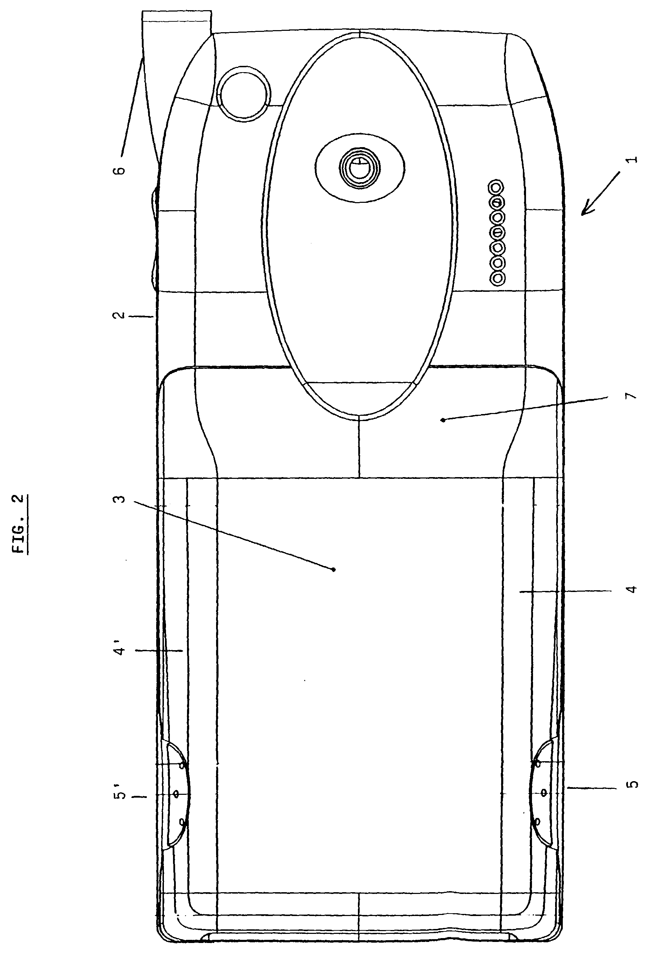

Fig. 2 zeigt eine Draufsicht auf die Rückseite des tragbaren Telefons 1 bestehend aus dem Gehäuse 2 und dem Batteriepack 3. Die beiden Verschlüsse 5 und 5' sind beidseitig des Batteriepacks 3 in seinen Seitenwänden 4 und 4' im hinteren Bereich des Batteriepacks 3 angeordnet. Das Batteriepack 3 kann beispielsweise in einer Schienenanordnung (nicht dargestellt) an seinen Bestimmungsort geschoben werden, wo es dann einrastet, oder es wird in eine an der vorderen Stirnseite 7 des Batteriepacks 3 angeordneten Halterung (nicht dargestellt) in das Gehäuse 2 eingesetzt und dann in Richtung des Gehäuses rotiert, bis die beidseitigen Verschlüsse 5, 5' einrasten.

### Bezugszeichenliste

- 1: tragbares Telefon
- 2: Gehäuse
- 3: Batteriepack
- 4, 4': Seitenwand
- 5, 5': Verschluß
- 6: Antennenhalterung
- 7: vordere Stirnfläche des Batteriepacks

## Patentansprüche

1. Batteriepack für ein tragbares Telefon, **dadurch gekennzeichnet**, daß das Batteriepack (3) zwei Verschlüsse (5, 5') zum Verbinden des Batteriepacks (3) mit dem Gehäuse (2) des tragbaren Telefons (1) aufweist.

2. Batteriepack nach Anspruch 1, **dadurch gekennzeichnet**, daß die beiden Verschlüsse (5, 5') gegenüberstehend in den Seitenflächen (4, 4') des Batteriepacks (3) angeordnet sind.

3. Batteriepack nach einem der Ansprüche 1 oder 2, **dadurch gekennzeichnet**, daß die Verschlüsse (5, 5') durch Schnappverschlüsse gebildet werden.

4. Tragbares Telefon mit einem Batteriepack nach einem der vorangegangenen Ansprüche.

5. Tragbares Telefon, **dadurch gekennzeichnet**, daß das Gehäuse (2) des Telefons (1) Gegenstücke der beiden Verschlüsse (5, 5') zum Einrasten des Batteriepacks (3) aufweist.

6. Tragbares Telefon nach einem der Ansprüche 4 oder 5, **dadurch gekennzeichnet**, daß das Gehäuse (2) des Telefons (1) und das Batteriepack (3) eine Vorrichtung zum rotierenden Einfädeln des Batteriepacks (3) in das Gehäuse (2) des Telefons (1) aufweist.

7. Tragbares Telefon nach einem der Ansprüche 4 oder 5, **dadurch gekennzeichnet**, daß das Gehäuse (2) des Telefons (1) und das Batteriepack (3) eine Vorrichtung zum Einschieben des Batteriepacks (3) in das Gehäuse (2) ds Telefons (1) aufeist.
